# EUROPÄISCHE PATENTSCHRIFT

(11) **EP 1 342 021 B1**
(45) Veröffentlichungstag und Bekanntmachung des Hinweises auf die Patenterteilung: **11.05.2005**
(21) Anmeldenummer: 01990558.7
(22) Anmeldetag: 13.12.2001
(51) Int. Cl.: F16H 1/00

(54) **VERFAHREN ZUR ERZIELUNG EINES GEWÜNSCHTEN ZAHNFLANKENSPIELS**
METHOD FOR ACHIEVING A DESIRED FLANK CLEARANCE BETWEEN TEETH
PROCEDE D'OBTENTION D'UN JEU DE FLANCS DES DENTS DESIRE

(30) Priorität: 14.12.2000 DE 10062241
(43) Veröffentlichungstag der Anmeldung: 10.09.2003
(73) Patentinhaber: Bayerische Motoren Werke Aktiengesellschaft, 80788 München (DE); Kollmann, Wolfgang, 8664 Veitsch (AT); Kollmann, Helga, 8664 Veitsch (AT)
(72) Erfinder: KOLLMANN, Wolfgang, A-8664 Veitsch (AT); KOLLMANN, Helga, A-8664 Veitsch (AT); KRATOCHWILL, Helmut, A-4400 Steyr (AT); REISINGER, Walter, A-4311 Schwertberg (AT); RATZBERGER, Reinhard, A-4431 Heidershofen (AT); BACHNER, Guenter, A-4400 Steyr (AT)
(74) Vertreter: Lippich, Wolfgang, Dipl.-Phys, Dr.rer.nat.
(86) Internationale Anmeldenummer: PCT/EP2001/014687
(87) Internationale Veröffentlichungsnummer: WO 2002/048575

(56) Entgegenhaltungen:
- DE-A- 2 300 851
- US-A- 3 548 673
- PATENT ABSTRACTS OF JAPAN vol. 005, no. 076 (M-069), 20. Mai 1981 (1981-05-20) & JP 56 024257 A (YAMAHA MOTOR CO LTD), 7. März 1981 (1981-03-07)
- PATENT ABSTRACTS OF JAPAN vol. 015, no. 336 (M-1151), 26. August 1991 (1991-08-26) & JP 03 131420 A (ISUZU MOTORS LTD), 5. Juni 1991 (1991-06-05)

## Beschreibung

Die Erfindung betrifft ein Verfahren zur Erzielung eines gewünschten Zahnflankenspiels bei einem Getriebe.

Bekanntlich dient das Zahnflankenspiel, insbesondere das Verdrehflankenspiel, zur Ausbildung einer hydrodynamischen Schmierung, zum Ausgleich von Maßänderungen durch Temperatureinflüsse, zur Verhinderung eines Verreibens oder vorzeitigen Verschleißes der Wellen, Achsen und Zahnräder sowie zum Ausgleich von Fertigungs- und Montagefehlern.

Um die Zahnflankenspiele bei zwei oder mehr sich im Eingriff befindlichen Zahnrädern (stirnverzahnt, schrägverzahnt oder andere), welche auf angetriebene oder mitgetriebene Wellen oder Achsen aufgepreßt, geschraubt oder anders befestigt sind, einzustellen, werden aufwendige Justiermaschinen oder Einstellgeräte in der Serienfertigung von Motoren, Getrieben oder sonstigen Aggregaten benötigt.

So ist beispielsweise aus der DE 1 180 596 B ein Getriebe mit einer Vorrichtung zum Einstellen des Zahnspiels bekannt, bei dem kegelig ausgebildete Zahnräder in Abhängigkeit von bestimmten Parametern des Getriebes gegeneinander axial verschoben werden und somit das Zahnspiel z.B. in Abhängigkeit von der Drehzahl, der Temperatur oder der Belastung einstellbar ist.

In der DE-OS 2 020 722 ist vorgesehen, die Zähne von Stirnradzahngetrieben keilförmig zu gestalten, so daß mit einer Axialverschiebung eines Rades das Zahnflankenspiel einstellbar ist.

Als häufiger Vorschlag für eine Zahnflanken-Spieleinstellung ist beispielsweise gemäß der DE-PS 650 754 bekannt, eine der Wellen der miteinander kämmenden Zahnräder in einer verstellbaren Exzenterbuchse zu lagern, die bei der Erzielung des gewünschten Flankenspiels relativ zum Gehäuse fixiert ist.

Exzenter-Elemente sind schließlich auch bei dem Getriebe für Ausgleichswellen einer Brennkraftmaschine gemäß der DE 197 50 286 A1 vorgesehen. Hierbei ist zur Zahnflanken-Spieleinstellung zwischen einem ersten, kurbelwellenseitigen Zahnrad und einem in einem Lagerrahmen der Ausgleichswellen gelagerten, mit einem Antriebsrad der Ausgleichswellen bereits kämmenden Zwischenrad oder zweiten Rad vorgesehen, daß der Lagerrrahmen mittels der Exzenter-Elemente relativ zum übrigen Maschinengehäuse zur Zahnflanken-Spieleinstellung verschiebbar und fixierbar angeordnet ist. Mit dieser Anordnung kann das Zahnflankenspiel nur zwischen zwei Zahnrädern eingestellt werden.

Aus der DE-PS 883 379 ist ein Zahnstangen-Zahnsegment-Getriebe bekannt, bei dem zur Vermeidung eines Zahnflankenspiels in einer der Endstellungen zumindest in einer Zahnflanke eine zahnflankenähnliche Zwischenlage vorgesehen ist.

Weiter ist aus Niemann und Winter, "Maschinenelemente", Band II, 2. Auflage, S. 365, ausgeführt, daß durch Verkupfern der Zähne eines Zahnrades sich das Flankenspiel praktisch auf null bringen läßt.

Ein Verfahren mit den Merkmalen des Oberbegriffs des Anspruchs 1 ist in der nicht vorveröffentlichten europäischen Patentanmeldung EP 1 101 979 A2 beschrieben.

Aus der JP 560 24 257 A ist es bekannt, bei einer Zehnradpumpe das Spiel zwischen Zahnrädern durch Auftrag einer Beschichtung einzustellen, die sich beim Lauf entfernt.

Der Erfindung liegt die Aufgabe zugrunde, ein relativ einfaches, kostengünstiges und schnelles Verfahren zur Erzielung eines gewünschten Zahnflankenspiels bei einem Getriebe bereitzustellen.

Die Erfindung stellt hierzu ein Verfahren zur Erzielung eines gewünschten Zahnflankenspiels bei einem Getriebes mit wenigstens zwei kämmenden Zahnrädern bereit. Die beiden Zahnräder werden zur Spieleinstellung relativ zueinander mittels einer entfernbaren Beschichtung auf mindestens einem Zahnrad eingestellt. Die Beschichtung umfaßt ein Gemisch, das ein Bindemittel und einen Füllstoff enthält. Zur Klarstellung sei erwähnt, daß unter Bindemittel nicht etwa ein Lösungsmittel verstanden wird, das lediglich zum Auftragen des Füllstoffes dient und nach dem Auftragen verdampft oder verdampft wird.

Bei diesem Verfahren wird also z.B auf ein gesamtes Zahnrad oder ein Zahnradsegment eine Beschichtung aus einem Gemisch eines Bindemittels und eines (z.B körnigen oder partikelartigen) Füllstoffs aufgebracht, deren Schichtdicke sich aus dem zu erzielenden Spiel ergibt. Die Bindemittel bewirkt, daß sich eine zusammenhängende Schicht ergibt. Die Beschichtung hält nach Abbinden oder Härten vorteilhaft dem Anpreßdruck bei der Einstellung des aufgrund der Beschichtung spielfreien Eingriffs der Zahnräder und der nachfolgenden Fixierung der ineinandergreifenden Räder stand. Dies wird in erster Linie durch den einverleibten Füllstoff erreicht, welche vor allem die Beschichtung inkompressibel macht.

Die aufgebrachte Beschichtung ist vorteilhafterweise leicht entfernbar, nachdem das Spiel eingestellt worden ist, beispielsweise durch mechanische Entfernung oder durch Ablösen mittels eines Lösungsmittels.

Bevorzugt wird jedoch eine Ablösung durch laufbedingten Abrieb erzielt. (Anspruch 4). Ein solches selbsttätiges Entfernen wird hauptsächlich durch die Anwesenheit des Füllstoffes bewirkt, der z.B. bei einem Probebetrieb des Getriebes für das notwendige Abgehen der Beschichtung in kleinsten Partikeln und innerhalb kurzer Zeit, vorzugsweise innerhalb von drei Minuten, sorgt. Das Abgehen in kleinen Partikeln kann wichtig sein, wenn etwa der Getriebeölkreislauf und ein Motorölkreislauf nicht voneinander getrennt sind. Die Beschichtung ist vorteilhaft Motor- oder Getriebeöl-verträglich, d.h. sie geht nicht etwa bei Ölkontakt ab, sondern erst bei einem Betrieb des Getriebes. So ergibt sich auf besonders einfache Weise das geforderte Zahnflankenspiel.

Das Bindemittel kann anorganisch oder organisch sein. Vorzugsweise umfaßt es ein Polymermaterial (Anspruch 2). Bei dem Füllstoff kann es sich um übliche Füllstoffe, wie Carbonate und Silicate, handeln. Vorzugsweise umfaßt der Füllstoff einen oder mehrere Festschmierstoffe (Anspruch 3).

In weiteren Unteransprüchen sind weitere vorteilhafte Ausgestaltungen angegeben.

Die Auftragung der Beschichtung kann auf herkömmliche Weise wie bei einem Anstrichmittel oder Lack erfolgen, also auch z.B. durch Lösungsmittel-freie elektrostatische Beschichtung (Pulverbeschichtung). Wenn das Bindemittel ein Polymermaterial ist, wird eine Auftragung bevorzugt, bei der das Polymermaterial in einem Lösungsmittel gelöst und der Füllstoff, insbesondere Festschmierstoff, in der Lösung suspendiert ist und dieses Lösungsmittel-haltige Gemisch im Tauchverfahren, Schleuderverfahren oder Sprühverfahren aufgebracht wird. Anschließend läßt man das Lösungsmittel ohne oder mit Erwärmen verdunsten. Falls erforderlich, wird das aufgebrachte Gemisch aus Polymermaterial und Füllstoff, insbesondere Festschmierstoff, gehärtet (Anspruch 5). Dies kann je nach Polymermaterial durch Erwärmen oder durch Bestrahlen mit UV- oder Elektronenstrahlung vorgenommen werden. Das Sprühverfahren zum Auftragen des Lösungsmittel-haltigen Gemischs wird besonders bevorzugt, da damit die gleichförmigste Auftragung erzielt werden kann (Anspruch 6).

Als Polymermaterial sind prinzipiell alle Kunstharze geeignet, die sich mit einem der oben genannten Verfahren zusammen mit einem Füllstoff, insbesondere Festschmierstoff auf die Zahnräder aufbringen lassen. Beispiele dafür sind Phenolharze, Aminharze, Alkydharze, Polyvinylacetal, Epoxidharze, Polyurethanharze, Polyesterharze, chloriertes Polypropylen, Ketonharze, Acrylatharze, Styrol-Butadien-Copoylmere, Polyamide, Polyimide, Polyesterimide, Polyetherimide und Polyamidimide oder deren Mischungen(Anspruch 7).

Besonders bevorzugt ist Polyamidimid (Anspruch 8). Polyamidimid wird in seiner Vorstufe Poly(carbamoylcarbonsäure) in einer Lösung, deren Viskosität gut einzustellen ist, zusammen mit dem Füllstoff, insbesondere Festschmierstoff auf das Zahnrad aufgebracht, und das Gemisch wird anschließend bei 180 bis 240°C vom Lösungsmittel befreit und zum Polyamidimid gehärtet (Anspruch 12). Je niedriger die Erwärmungstemperatur ist, desto unvollständiger ist die Härtung, wodurch die Beschichtung bei einem Probelauf des Getriebes leichter abgeht. Eine Temperatur von etwa 220°C über etwa 60 Minuten ergibt eine besonders gute Beschichtungseigenschaft. Das gehärtete Polyamidimid sorgt zusammen mit dem Füllstoff, insbesondere Festschmierstoff für eine ausgezeichnete Inkompressibilität und löst sich dennoch bei einem Probelauf des Getriebes leicht von den Zahnrädern ab, ist aber Motoröl-kompatibel und löst sich bei einem Kontakt mit diesem nicht.

Wenn der Füllstoff ein Festschmierstoff ist, kann es sich dabei um alle bekannten Festschmierstoffe handeln, die in der Lage sind, dem Polymermaterial genügend Inkompressibilität zu verleihen. Dies sind insbesondere anorganische Festschmierstoffe, wie Graphit, MoS₂, Bortrioxid, Bleimonoxid, basisches Bleicarbonat, Mennige und Gläser. Bevorzugt werden Graphit und MoS₂ (Anspruch 9) und besonders bevorzugt ist MoS₂, da dieses besonders Motor-verträglich ist.

Die Teilchengröße des verwendeten Festschmierstoffes richtet sich nach der gewünschten Dicke der Beschichtung. Wenn MoS₂ als Festschmierstoff verwendet wird, liegt sie im allgemeinen in einem Bereich etwa 1 bis 60 µm, bevorzugt 1 bis 10 µm und insbesondere 3 bis 5 µm (Anspruch 10). Bei Dicken von mehr als etwa 20 µm kann es, falls beipielsweise kleine (<5 µm) MoS₂-Teilchen verwendet werden, je nach Bindemittel erforderlich sein, daß die Beschichtung in mehreren Schritten aufgebracht wird, da sonst eine ungleichmäßige Auftragung durch "Verlaufen" des aufgetragenen Gemisches erfolgen könnte. Dabei wird zwischen den einzelnen Auftragungsvorgängen eine Trocknungspause eingelegt, ggf. unter Erwärmen auf nicht allzu hohe Temperaturen, bei Polyamidimid-Bindemittel beispielsweise unter 120°C. Eine sehr homogene Beschichtung mit einer End-Beschichtungsdicke von 45 bis 60 µm nach Härten wird bevorzugt durch zweimaliges Auftragen eines Gemischs aus Bindemittel und MoS₂ mit einer Teilchengröße von 3 bis 5 µm erhalten. Große Teilchengrößen bis 60 µm gestatten, daß eine gleichförmige Beschichtung z.B. mit der obigen Dicke auch bei einmaligem Auftragen des Gemisches erzielt wird.

Der Gehalt an Füllstoff, insbesondere Festschmierstoff in der gehärteten Beschichtung liegt im allgemeinen bei etwa 20 bis 40 Gew.-%, bezogen auf das Gesamtgewicht der Beschichtung, und bevorzugt bei etwa 23 bis 33 Gew.-%.

Wie oben erwähnt, wird das Polymermaterial bevorzugt in Lösung aufgetragen, die außerdem den darin suspendierten Füllstoff, insbesondere Festschmierstoff enthält. Die Art und Menge an Lösungsmittel richtet sich nach dem speziellen eingesetzten Polymer. Im allgemeinen liegt die Menge im Bereich von 10 bis 35 Gew.-%, bezogen auf das Gesamtgewicht des aufzutragenden Gemischs, wobei der gewünschten Viskosität der Lösung Rechnung getragen wird.

In einem konkreten Fall kann das aufzutragende Gemisch aus etwa 50 bis 65 Gew.-% Polyamidimidharz, etwa 20 bis 25 Gew.% MoS₂ und etwa 13 bis 30 Gew.-% Lösungsmittel bestehen (Anspruch 11). In diesem konkreten Fall. ist das Lösungsmittel eine Lösungsmittelmischung, die aus etwa 1,25 bis 2,5 Gew.-% 2-Methyl-2-pentanol-4-on, 5 bis 12,5 Gew.-% Dimethylbenzol, 2 bis 5 Gew.-% Toluol und 5 bis 10 Gew.-% N-Methylpyrrolidon, alles bezogen auf das Gesamtgewicht des aufzutragenden Gemisches, besteht.

Die Beschichtung wird völlig gleichmäßig vom Zahnfuß bis zum Zahnkopf und von der Zahnvorder- zur Zahnrückseite aufgetragen. Dabei kann der gesamte Zahnkranz beschichtet werden. Bevorzugt wird aber nur ein Segment des Zahnkranzes beschichtet, beispielsweise ein Segment von etwa 140°C (Anspruch 13). Damit läßt sich leicht überprüfen, ob die Beschichtung nach Trocknen und gegebenenfalls Härten die gewünschte Dicke aufweist. Die Zahnräder werden in einer Stellung, in welcher der oder die beschichtete(n) Teil(e) des oder der beschichteten Zahnrads bzw. Zahnräder im Eingriff stehen, fixiert; dann wird der oder die beschichtete(n) Teil(e) des oder der beschichteten Zahnrads oder -räder aus dem Eingriff herausgedreht, und mittels einer Lehre wird das Spiel zwischen dem oder den beschichteten Zahnrad oder -rädern und ggf. unbeschichtetem Zahnrad bzw. unbeschichteten Zahnrädern gemessen.

Die Dicke der getrockneten und ggf. gehärteten Beschichtung richtet sich nach dem gewünschten Zahnflankenspiel. Bei Anwendungen für Ausgleichswellen von Brennkraftmaschinen kann sie beispielsweise bei einer Beschichtung auf beiden Flanken eines Zahnrads oder auf gegenüberliegenden Flanken einer Zahnlücke im Bereich von 10 bis 60 µm für ein Gesamt-Verdrehflankenspiel von 20 bis 120 µm liegen (Anspruch 14).

Bevorzugt werden die Teile eines Zahnrads, auf die eine Beschichtung aufgebracht werden soll, einer Phosphatierung mit einem herkömmlichen Phosphatierungsmittel unterzogen (Anspruch 15), um zu verhindern, daß sich die Polymermaterial/Festschmierstoffbeschichtung in Form von Platten ablöst.

Die Erfindung wird nun anhand eines Beispiels und der Zeichnung beschrieben, in der:

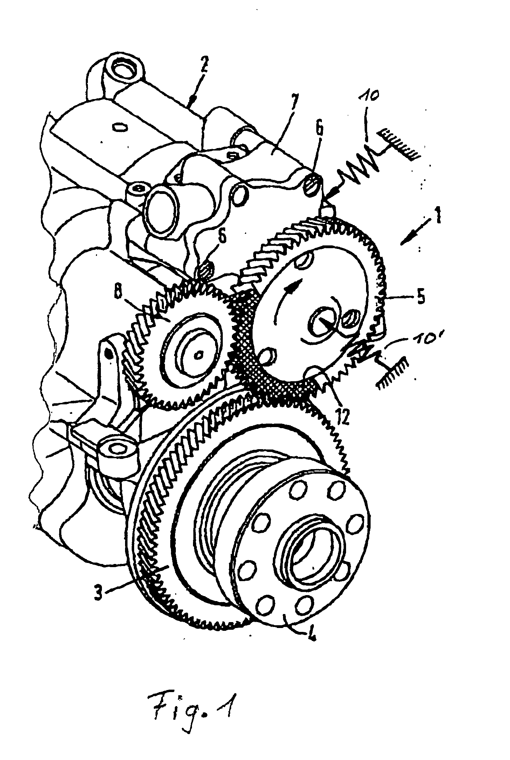

- Figur 1: ein Getriebe für Ausgleichswellen einer Brennkraftmaschine mit einer Beschichtung eines Zahnrads aus Polymermaterial und MoS₂ ist;
- Figur 2: eine schematische Darstellung eines Ausschnitts zweier eben dargestellter, bereits eingestellter, kämmender Zahnräder zeigt, und zwar mit Beschichtung (Figur 2a) und mit entfernter Beschichtung (Fig 2b).

Ein Getriebe 1 für eine Ausgleichswellen-Vorrichtung 2 einer nicht näher dargestellten Brennkraftmaschine umfaßt ein erstes, um eine gehäusefeste Achse drehbares Zahnrad 3 auf einer Kurbelwelle 4 der Brennkraftmaschine. Mit dem Kurbelwellen-Zahnrad 3 kämmt ein zweites Zahnrad 5, das zum Antrieb einer bei der Montage begrenzt verschiebbaren und anschließend mittels Schraubbolzen 6 feststellbaren Pumpe 7 dient. Das zweite Zahnrad 5 dient auch als Zwischenrad für ein drittes Zahnrad 8 zum Antrieb nicht gezeigter Ausgleichwellen in der Ausgleichswellen-Vorrichtung 2.

Zur Einstellung eines Zahnflankenspiels zwischen den drei miteinander kämmenden Zahnräder 3, 5 und 8 dient eine auf dem Zahnrad 5 in einem Teilsegment aufgebrachte Beschichtung 12. Diese Beschichtung 12 ist auf dem zweiten Zahnrad 5, das mit einer vorbestimmten Kraft gemäß einer bei lose angeordneter Pumpe 7 einwirkenden Federspannung 10 zum ersten und dritten Zahnrad 3, 8 zustellbar ist, spielfrei zwischen korrespondierenden Zahnflanken der Zahnräder, 3, 5, 8 angeordnet.

Die am Zahnrad haftende Beschichtung 12 weist auf beiden Flanken eines Zahnes jeweils eine Materialstärke von 10 µm - 60 µm für ein Gesamt-Verdrehflankenspiel von 20 µm - 120 µm auf. Diese Dickenmaße gelten insbesondere in den gezeigten Eingriffspunkten auf dem Teilkreis des Zahnrades 5, wobei diese Dickenmaße mittels einer auf die leicht gelöste Pumpe 7 seitlich angreifenden Kraft-Vorrichtung mit der Federspannung 10 erzielt sind.

Zur Steigerung der Einstellgenauigkeit ist bei einem schrägverzahnten Stirnradgetriebe 1 zusätzlich eine axial gerichtete Kraftkomponente 10', die auf die noch gelöst angeordnete Pumpe 7 einwirkt, vorgesehen.

Zur Erzielung eines Null-Flankenspiels bei im Eingriff befindlicher Beschichtung 12 werden die Zahnräder 3,5,8 geringfügig hin- und hergedreht. Zur Überprüfung der Schichtdicke wird die Pumpe 7 mittels der Schraubeinrichtungen 6 fixiert und das Zahnradsegment mit der Beschichtung 12 aus dem kämmenden Bereich herausgedreht, und das Zahnflankenspiel wird mittels einer Lehre gemessen.

In Figur 2a ist eine schematische Darstellung eines Ausschnitts zweier eben dargestellter, bereits eingestellter, kämmender Zahnräder 3 und 5 gezeigt. Eines der beiden Zahnräder, nämlich Zahnrad 5 trägt eine (hier übertrieben dick gezeichnete) Beschichtung 12. Die Einstellung erfolgt ohne Spiel oder mit einem geringeren als dem erwünschten Spiel. Bei dem bevorzugten Fall einer Einstellung ohne Spiel entspricht die Dicke der Beschichtung 12 dem im Endzustand (nach Entfernung der Beschichtung 12) erwünschten Spiel. Die Zahnräder 3, 5 sind im Zahnflankenbereich ohne Spiel aufeinander eingestellt. Im Bereich der Zahnköpfe besteht ein Zwischenraum, da hier ein größeres Spiel als die Dicke der Beschichtung erwünscht ist (sog. Zahnkopfspiel).

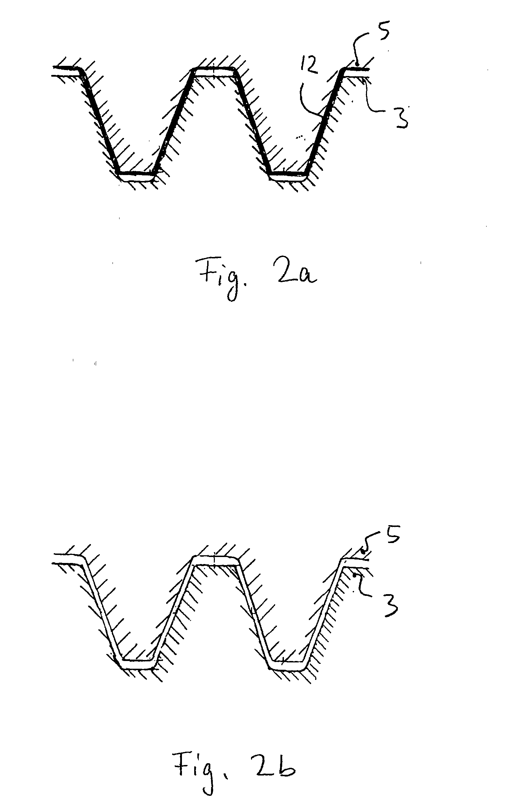

Bei einem Getriebeprobelauf geht die Beschichtung 12 selbsttätig ab. Es ergibt sich dann das in Fig. 2b gezeigte erwünschte Zahnflankenspiel (welches zur Veranschaulichung übertrieben groß dargestellt ist).

### BEISPIEL

### Herstellung einer Zahnradbeschichtung

Eine Polyamidimid-Vorstufe (Pyralin®, erhältlich von der Firme DuPont Deutschland GmbH)(50 g) in einer Lösung von 2,5 g 2-Methyl-2-pentanol-4-on und 10 g Dimethylbenzol wurde mit 2,5 g Toluol und 10 g N-Methylpyrrolidon verdünnt und gerührt. Dann wurden 25 g MoS₂-Partikel mit einer durchschnittlichen Teilchengröße von 3 - 5 µm dazugegeben und mittels eines Dispergiergeräts gut in der Lösung dispergiert. Die entstandene Suspension wurde in eine Sprühpistole überführt.

Ein phosphatiertes Zahnrad eines Getriebes wurde in einem Segment von 140° aus einer Entfernung von 20 cm besprüht und anschließend 50 Minuten bei 100°C getrocknet. Danach fand ein zweites Besprühen unter der oben genannten Bedingung statt.

Die Beschichtung wurde dann 70 Minuten bei 190°C getrocknet und gehärtet. Die Schichtdicke nach Trocknen und Härten betrug 55 µm. Nach Fixierung des beweglichen Zahnrads löste sich diese Beschichtung nach 3-minütigem Probelauf des Getriebes in Form kleinster Partikel von dem Zahnrad.

## Patentansprüche

1. Verfahren zur Erzielung eines gewünschten Zahnflankenspiels bei einem Getriebe mit wenigstens zwei kämmenden Zahnrädern, die zur Spieleinstellung relativ zueinander mittels einer entfernbaren Beschichtung auf wenigstens einem der Zahnräder eingestellt werden, wobei die Beschichtung in Form eines Gemisches aus einem Bindemittel und einem Füllstoff aufgetragen wird.

2. Verfahren nach Anspruch 1, **dadurch gekennzeichnet, daß** das Bindemittel ein Polymermaterial umfaßt.

3. Verfahren nach Anspruch 1 oder 2, **dadurch gekennzeichnet, daß** der Füllstoff einen Festschmierstoff umfaßt.

4. Verfahren nach einem der Ansprüche 1 bis 3, **dadurch gekennzeichnet, daß** die Entfernung der Beschichtung durch laufbedingten Abrieb erfolgt.

5. Verfahren nach einem der Ansprüche 2 bis 4, **dadurch gekennzeichnet, daß** das Gemisch in Form einer Lösung des Polymermaterials, in welcher der Füllstoff suspendiert ist, aufgebracht und anschließend durch Verdunsten oder Erwärmen vom Lösungsmittel befreit und gegebenenfalls gehärtet wird.

6. Verfahren nach Anspruch 5, **dadurch gekennzeichnet, daß** das Gemisch aufgesprüht wird.

7. Verfahren nach einem der Ansprüche 2 bis 6, **dadurch gekennzeichnet, daß** das Polymermaterial ausgewählt ist aus Phenolharzen, Aminharzen, Alkydharzen, Polyvinylacetal, Epoxidharzen, Polyurethyharzen, Polyesterharzen, chloriertem Polypropylen, Ketonharzen, Acrylatharzen, Styrol-Butadien-Copolymeren, Polyamiden, Polyimiden, Polyesterimiden, Polyetherimiden und Polyamidimiden.

8. Verfahren nach Anspruch 7, **dadurch gekennzeichnet, daß** das Polymermaterial ein Polyamidimidharz ist.

9. Verfahren nach einem der Ansprüche 3 bis 8, **dadurch gekennzeichnet, daß** der Festschmierstoff MoS₂ oder Graphit ist.

10. Verfahren nach Anspruch 9, **dadurch gekennzeichnet, daß** der Festschmierstoff MoS₂ ist und eine Teilchengröße im Bereich von 1 bis 60 µm, bevorzugt 1 bis 15 µm und insbesondere 3 bis 5µm aufweist.

11. Verfahren nach einem der Ansprüche 1 bis 10, **dadurch gekennzeichnet, daß** das Gemisch bei der Auftragung 50 bis 65 Gew.-% Polyamidimidharz, 20 bis 25 Gew.-% MoS₂ und 13 bis 30 Gew.-% Lösungsmittel, bezogen auf das Gesamtgewicht des Gemisches, umfaßt.

12. Verfahren nach einem der Ansprüche 8 bis 11, **dadurch gekennzeichnet, daß** das aufgetragene Gemisch bei einer Temperatur von 90°C bis 240°C gehärtet wird.

13. Verfahren nach Anspruch 12, **dadurch gekennzeichnet, daß** das aufgetragenen Gemisch bei einer Temperatur von 180°C bis 240°C gehärtet wird.

14. Verfahren nach einem der Ansprüche 1 bis 13, **dadurch gekennzeichnet, daß** das Gemisch auf ein Zahnradsegment, insbesondere von 140°, aufgebracht wird.

15. Verfahren nach einem der Ansprüche 1 bis 14, **dadurch gekennzeichnet, daß** das Gemisch auf beiden Flanken eines Zahnes oder auf gegenüberliegenden Flanken einer Zahnlücke mit einer Dicke nach Abbinden oder Härten von jeweils 10 bis 60 µm für ein Gesamt-Verdrehflankenspiel von 20 bis 120 µm aufgebracht wird.

16. Verfahren nach einem der Ansprüche 1 bis 15, **dadurch gekennzeichnet, daß** Teile des Zahnrades, auf die das Gemisch aufgebracht werden soll, vor der Aufbringung einer Phosphatierung unterzogen werden.

17. Verfahren nach einem der Ansprüche 1 bis 16, **dadurch gekennzeichnet, daß** die beiden Zahnräder zur spielfreien Einstellung mit einer vorbestimmten Kraft aufeinander gedrückt werden.

18. Zahnrad, das eine entfernbare Beschichtung aufweist, wobei die Beschichtung ein Gemisch umfaßt, das ein Bindemittel und einen Füllstoff enthält, und wobei die Beschichtung zur Erzielung eines gewünschten Zahnflankenspiels bei einem Getriebe gemäß dem Verfahren nach einem der Ansprüche 1 bis 17 aufgetragen ist.

## Claims

1. Method of obtaining a desired tooth flank backlash for a transmission comprising at least two interlocking toothed gears which are adjusted relative to one another by means of a removable coating on at least one of the toothed gears for the purpose of setting the backlash, wherein the coating is applied in the form of a mixture containing a bonding agent and a filling material.

2. Method according to Claim 1, **characterized in that** the bonding agent comprises a polymeric material.

3. Method according to Claim 1 or 2, **characterized in that** the filling material comprises a solid lubricant.

4. Method according to one of Claims 1 to 3, **characterized in that** the removal of the coating is obtained by abrasion of the coating caused by a run of the transmission.

5. Method according to one of Claims 2 to 4, **characterized in that** the mixture is applied in the form of a solution of the polymeric material, in which the filling material is suspended, and subsequently freed of the solvent by evaporation or heating and possibly hardened.

6. Method according to Claim 5, **characterized in that** the mixture is sprayed on.

7. Method according to one of Claims 2 to 6, **characterized in that** the polymeric material is selected from phenolic resins, amino resins, alkyd resins, polyvinyl acetal, epoxy resins, polyurethane resins, polyester resins, chlorinated polypropylene, ketone resins, acrylate resins, styrenebutadiene copolymers, polyamides, polyimides, polyesterimides, polyetherimides and polyamidimides.

8. Method according to Claim 7, **characterized in that** the polymeric material is a polyamidimide resin.

9. Method according to one of Claims 3 to 8, **characterized in that** the solid lubricant is MoS₂ or graphite.

10. Method according to Claim 9, **characterized in that** the solid lubricant is MoS₂ and has a particle size in the range from 1 to 60 µm, preferably 1 to 15 µm and in particular 3 to 5 µm.

11. Method according to one of Claims 1 to 10, **characterized in that**, during application, the mixture presents 50 to 65% by weight of polyamidimide resin, 20 to 25% by weight of MoS₂, and 13 to 30% by weight of solvent, relative to the total weight of the mixture.

12. Method according to one of Claims 8 to 11, **characterized in that** the applied mixture is hardened at a temperature between 90°C and 240°C.

13. Method according to Claim 12, **characterized in that** the applied mixture is hardened at a temperature between 180°C and 240°C.

14. Method according to one of Claims 1 to 13, **characterized in that** the mixture is applied to a segment of the toothed gear, in particular a segment of 140°.

15. Method according to one of Claims 1 to 14, **characterized in that** the mixture is applied to both flanks of a tooth or on opposing flanks of a tooth gap, with a thickness after bonding or hardening of 10 to 60 µm for a total circumferential backlash of 20 to 120 µm.

16. Method according to one of Claims 1 to 15, **characterized in that** that parts of the toothed gear on which the mixture is to be applied are subjected to phosphatization prior to the application.

17. Method according to one of Claims 1 to 16, **characterized in that** both toothed gears are pressed against one another with a pre-determined force in order to obtain a play-free alignment.

18. Toothed gear which has a removable coating, wherein the coating comprises a mixture containing a bonding agent and a filling material, and wherein the coating is applied for obtaining a desired tooth flank backlash for a transmission in accordance with the method according to one of Claims 1 to 17.

## Revendications

1. Procédé pour l'obtention d'un jeu de flancs des dents souhaité, dans un engrenage avec au moins deux roue dentées s'engrenant l'une dans l'autre qui, pour le réglage du jeu, sont ajustées l'une par rapport à l'autre à l'aide d'un revêtement éliminable sur au moins l'une des roues dentées, moyennant quoi le revêtement est appliqué sous forme d'un mélange constitué d'un liant et d'une charge.

2. Procédé selon la revendication 1, **caractérisé en ce que** le liant comprend un matériau polymère.

3. Procédé selon la revendication 1 ou 2, **caractérisé en ce que** la charge comprend un lubrifiant solide.

4. Procédé selon l'une quelconque des revendications 1 à 3, **caractérisé en ce que** l'élimination du revêtement se fait par frottement provoqué par le roulement.

5. Procédé selon l'une quelconque des revendications 2 à 4, **caractérisé en ce que** le mélange est appliqué sous forme d'une solution du matériau polymère dans laquelle la charge est mise en suspension, puis il est débarrassé du solvant par évaporation ou par réchauffage et, le cas échéant, durci.

6. Procédé selon la revendication 5, **caractérisé en ce que** le mélange est pulvérisé.

7. Procédé selon l'une quelconque des revendications 2 à 6, **caractérisé en ce que** le matériau polymère est choisi parmi les résines phénoliques, les résines d'amine, les résines d'alkyle, l'acétal polyvinylique, les résines époxy, les résines polyuréthy, les résines de polyester, les polypropylènes chlorés, les résines cétoniques, les résines acryliques, les copolymères de styrène-butadiène, les polyamides, les polyimides, les polyester-imides, les polyéther-imides et les polyamide-imides.

8. Procédé selon la revendication 7, **caractérisé en ce que** le matériau polymère est une résine polyamide-imide.

9. Procédé selon l'une quelconque des revendications 3 à 8, **caractérisé en ce que** le lubrifiant solide est du MoS₂ ou du graphite.

10. Procédé selon la revendication 9, **caractérisé en ce que** le lubrifiant solide est du MoS₂ et présente une taille de particule dans la plage comprise entre 1 et 60 µm, de préférence entre 1 et 15 µm et, en particulier, entre 3 et 5 µm.

11. Procédé selon l'une quelconque des revendications 1 à 10, **caractérisé en ce que** le mélange comprend, pour l'application, entre 50 % et 65 % en poids de résine polyamide-imide, entre 20 % et 25 % en poids de MoS₂ et entre 13 % et 30 % en poids de solvant, par rapport au poids total du mélange.

12. Procédé selon l'une quelconque des revendications 8 à 11, **caractérisé en ce que** le mélange appliqué est durci à une température entre 90°C et 240°C.

13. Procédé selon la revendication 12, **caractérisé en ce que** le mélange appliqué est durci à une température entre 180°C et 240°C.

14. Procédé selon l'une quelconque des revendications 1 à 13, **caractérisé en ce que** le mélange est appliqué sur un segment de roue dentée, en particulier de 140°.

15. Procédé selon l'une quelconque des revendications 1 à 14, **caractérisé en ce que** le mélange est appliqué sur les deux flancs d'une dent ou sur les flancs opposés d'un entredent sur une épaisseur, après la prise ou le durcissement, de 10 µm à 60 µm pour un jeu de flancs primitif total de 20 µm à 120 µm.

16. Procédé selon l'une quelconque des revendications 1 à 15, **caractérisé en ce que** des parties de la roue dentée, sur lesquelles le mélange doit être appliqué, sont soumise à une phosphatation avant l'application.

17. Procédé selon l'une quelconque des revendications 1 à 16, **caractérisé en ce que** les deux roues dentées sont pressées l'une contre l'autre avec une force prédéterminée pour le réglage sans jeu.

18. Roue dentée qui comporte un revêtement éliminable, le revêtement comprenant un mélange qui contient un liant et une charge, et le revêtement étant appliqué pour l'obtention d'un jeu de flancs des dents souhaité dans un engrenage selon le procédé selon l'une quelconque des revendications 1 à 17.
